# EUROPÄISCHE PATENTSCHRIFT

(11) **EP 3 289 231 B1**
(45) Veröffentlichungstag und Bekanntmachung des Hinweises auf die Patenterteilung: **27.02.2019**
(21) Anmeldenummer: 16723634.8
(22) Anmeldetag: 27.04.2016
(51) Int. Cl.: F16B 13/14

(54) **SCHRAUBANKER**
SCREW ANCHOR
BOULON D'ANCRAGE

(30) Priorität: 30.04.2015 DE 102015005359; 30.04.2015 DE 202015003072 U
(43) Veröffentlichungstag der Anmeldung: 07.03.2018
(73) Patentinhaber: Marks, Thomas, 57223 Kreuztal (DE)
(72) Erfinder: Marks, Thomas, 57223 Kreuztal (DE)
(74) Vertreter: Manasse, Uwe
(86) Internationale Anmeldenummer: PCT/DE2016/000175
(87) Internationale Veröffentlichungsnummer: WO 2016/173577

(56) Entgegenhaltungen:
- DE-B3-102005 003 997

## Beschreibung

Die Erfindung betrifft einen Schraubanker zur Verwendung mit einem Sanddübel in Bohrlöchern in Beton, Naturstein oder anderen massiven Ankergründen.

Insbesondere sind hier professionelle Dübel- oder Ankerkonstruktionen gemeint, wie sie als Produkte mit entsprechenden Zertifikaten oder Zulassungen bei sicherheitsrelevanten Befestigungsaufgaben eingesetzt werden, zum Beispiel im Konstruktiven Ingenieurbau, Tunnelbau, Stahlbetonwasserbau, oder bei Bau oder Ausrüstung von Schienenfahrwegen, Häfen, Schleusen oder Brücken. Bei derartigen Anwendungen stehen vor allen Dingen die Sicherheit, die Nachhaltigkeit und die wirtschaftliche Verarbeitbarkeit der Befestigungssysteme oder Dübelprodukte auf der Baustelle im Vordergrund.
Ein wesentliches Auswahlkriterium für Befestigungen auf Brücken oder im Gleisbau ist die Eignung der Befestigungsmittel hinsichtlich dynamischer Beanspruchungen. Auch werden Stahlsorten für Verankerungen bevorzugt ausgewählt, die besonders zäh oder korrosionsbeständig sind, sich unter dynamischer Last gutmütig verhalten, über ein günstiges Schwingungs- oder Dauerlastverhalten verfügen, möglicherweise schweißbar sein sollen oder kostengünstig verarbeitbar sind. Anwendungsbeispiele dafür sind zum Beispiel Bundschwellenschrauben für Schienenbefestigungen oder Befestigungsschrauben für Stahlschutzplanken auf Betonbrücken.
Ein weiteres Kriterium bei dynamisch beanspruchten Befestigungen ist die erforderliche Einbindetiefe in das Bauwerk oder Bauteil. Bevorzugt werden Befestigungssysteme ausgewählt, die unabhängig von der Einbindetiefe eingesetzt werden können.

Allgemein sind Schraube-Kunststoffdübel-Systeme bekannt, die für leichte Befestigungen oder beispielsweise im Hochbau als Rahmendübel eingesetzt werden. Bekannte Schraube-Kunststoffdübel-Systeme sind aber zur Verwendung als Schraubanker ungeeignet, weil wegen der Werkstoffeigenschaften des Kunststoffdübels keine nennenswerten Dauerzugkräfte an der Schraube über den Kunststoffdübel übertragen werden können. Zudem müssen die Durchmesser der verwendeten Schrauben durchweg deutlich kleiner sein als der Durchmesser des Bohrlochs, damit die Kunststoffdübel-Struktur vom Schraubengewinde nicht zerschnitten oder das Kunststoffmaterial des Dübels vom Schraubenkern nicht verquetscht wird.

Mit DE 44 14 765 A1 ist ein zweiteiliger Schraubanker bekannt geworden, der aus einer Gewinde furchenden Schraube und einem asymmetrischen Dübelelement besteht und auch in einer Betonwand einsetzbar sein soll. Die Zugtragwirkung des Schraubankers soll einerseits mittelbar über das asymmetrische Dübelelement und andererseits teilweise unmittelbar durch Formverbund des in den massiven Ankergrund eingefrästen Gewindes erfolgen. Das setzt jedoch voraus, dass das Gewinde der Schraube wie bei bekannten Beton- oder Mauerschrauben sehr robust ausgebildet sein muss. Für Verkehrsbauwerke sind solche Schrauben-Dübel-Systeme praktisch nicht zugelassen.

Es sind einteilige Schraubanker als gewindefurchende Schrauben oder als Betonschrauben bekannt, die beim Eindrehen in ein vorgebohrtes Bohrloch ein Gewinde in die Bohrlochwand einfräsen oder furchen. In der Regel entspricht der Nenndurchmesser der Schraube dem Nenndurchmesser des Bohrloches. Einteilige Betonschrauben mit Zulassung werden in der Regel nur bis zu einem Nenndurchmesser des Bohrlochs von 14 mm verwendet. Größere zugelassene Betonschrauben werden zusätzlich mit Injektionsmörtel im Bohrloch eingebaut.
Grundsätzlich ist der tatsächliche Außendurchmesser des Gewindeabschnitts bei derartigen gewindefurchenden Schrauben größer als der Bohrlochdurchmesser, größer als der Nenndurchmesser und größer als das Eckmaß des Bohrers, damit sich das Schraubengewinde für genügend großen Formschluss in den Ankergrund einfurchen kann.
In der Praxis wird bei größeren Schraubendurchmessern und höheren Betongüten das Verhältnis von Einschraubwiderstand zu zulässiger Ankerkraft in der Regel unwirtschaftlicher. Auch führen die großen Einschraubwiderstände dazu, dass das Schneid- oder Fräsgewinde entsprechend robust ausgestaltet sein muss.

Gleichzeitig muss der Kerndurchmesser der gewindefurchenden Schraube mit Abstand kleiner sein als der tatsächliche Bohrlochdurchmesser, damit der Einschraubwiderstand durch Reibung zwischen Schraubenkern und Material des Ankergrundes nicht unnötig vergrößert wird. Dazu zählt auch das Material des Ankergrundes, das durch Ausfräsen oder Ausbrechen aus der Gewindefurche gelöst wird und sich im Bohrloch ansammelt. Grundsätzlich besteht bei solchen Betonschrauben die Gefahr, dass sich vom Grund der eingefrästen Gewindefurche ausgehend Risse im Beton bilden können, die sich infolge bekannter Kerbwirkung bei axialer Zugbelastung der Schraube vergrößern und die Betonstruktur schädigen.

Das Tragverhalten von Betonschrauben entspricht demjenigen von Hinterschnittankern. Dabei wird über eine möglichst große Presskontaktfläche zwischen Gewindeflanke der Schraube und der Furche im Ankergrund Formverbund hergestellt und über den Normalkraftschluss die Ankerkraft der Schraube in den Ankergrund eingetragen. Eine eventuelle Überbeanspruchung dieses Formverbundes bzw. der Hinterschneidung führt zum Abbrechen oder Ausbrechen von Bruchstücken des Ankergrundes.
Neben den üblichen Maßtoleranzen von Schraube, Bohrwerkzeug (Bohrer) und Bohrloch müssen bei der Ausgestaltung von gewindefräsenden Betonschrauben zum Teil zusätzlich auch Rissweiten im Beton berücksichtigt werden. Zum Beispiel wird in der WO 00/28225 A1 für eine gewindefurchende Betonschraube zur Dimensionierung der Presskontaktfläche erstens vorgeschlagen, die Gewindesteigung p der Schraube auf einen oberen Maximalwert, nämlich p ≤ 10 (da - dbe)/2 zu begrenzen, wobei da dem Außendurchmesser des Gewindes und dbe dem Bohrereckmaß des Mauerbohrers entspricht. Zweitens wird alternativ oder weiter einschränkend vorgeschlagen, die Gewindesteigung p auf einen vom Nenndurchmesser unmittelbar abhängigen oberen Maximalwert zu begrenzen.

Im Stahlbetonbau ist zur Dimensionierung von Betonrippenstählen ein ähnliches Kriterium bekannt. Statt auf die Durchmesserdifferenz ist der analoge Verhältniswert auf die jeweils entsprechende Radiusdifferenz des profilierten Rundstahls bzw. auf die Rippenhöhe des Betonrippenstabs bezogen. Üblicherweise beträgt der im Stahlbetonbau gewählte, vergleichbare maximale Verhältniswert s ≤ 10 t, wobei das Verhältnis von Rippenabstand s zu Rippenhöhe t dem Kehrwert der bekannten Bezogenen Rippenhöhe entspricht.
Andererseits ist das Tragverhalten einer Betonschraube mit dem eines einbetonierten Betonrippenstahls nicht vergleichbar, weil zwischen Bohrloch und Betonschraubenkern ein Spalt vorhanden ist und dem gegenüber ein einbetonierter Betonrippenstahl vorteilhaft in einem Beton-Kontinuum wirken kann. Somit wurde zwar - im Wesentlichen empirisch - eine vorteilhafte obere Grenze für den Rippenabstand bei Rippenstählen und wie vor beschrieben für die Gewindesteigung bzw. für den Gewindeabstand einer Betonschraube angegeben, aber keine vorteilhafte untere Schranke.

In praktischer Ausgestaltung bekannter Betonschrauben ist der Bohrer- oder BohrlochNenndurchmesser gleich dem Nenndurchmesser der Schraube; ausnahmsweise werden die Schraubennenndurchmesser von bekannten Betonschrauben nominell um 2 mm größer als der Bohrlochnenndurchmesser angegeben. Trotzdem ist die Frästiefe des Gewindes bzw. der Eingriff der Gewindeflanken in die Bohrlochwand oder die sogenannte Hinterschneidung relativ klein gegenüber dem Außendurchmesser des Schraubengewindes und der tatsächlichen Gewindetiefe. Unter Berücksichtigung der maximalen Abnutzung des Bohrers sind für Betonschrauben der Nenngrößen 10 bis 14 üblicherweise Frästiefen von maximal 1,05 mm bis 1,35 mm erzielbar. In der Regel und abhängig vom Abnutzungsgrad des Bohrers sind die Frästiefen von Gewinden zugelassener Betonschrauben in die Bohrlochwand auf ca. 1 mm bis maximal 1,3 mm, ausnahmsweise bis auf 1,4 mm, begrenzt. In geübter Baustellenpraxis liegen die praktisch erzielbaren Frästiefen im Mittel eher bei 0,8 mm bis 1,1 mm in Beton. Bei einer Rissöffnung oder im Bewegten Riss reduziert sich die wirksame Hinterschneidung weiter. Für die meisten zugelassenen Betonschrauben wird in der Praxis eine Gewindetiefe t kleiner als 2 mm angegeben.
Bei großen Einschraubtiefen nutzen sich die Fräsgewinde der Betonschrauben bekanntlich vermehrt ab. Somit ist die Einsetzbarkeit von Betonschrauben oder einteiligen Schraubankern in Beton ohne zusätzlich angeordnete Überbohrung nicht unabhängig von der Einschraubtiefe in ein Betonbauteil. Zudem sind bekannte einteilige Schraubanker für Verankerungen in Beton überwiegend nur bei statischen oder quasi-statischen Lasten zulässig anwendbar.

Weitere bekannte einteilige Schraubanker sind gewindeschneidende Holzschrauben für Tragende Holzschraubenverbindungen. In der Regel sind die Gewinde von Holzschrauben als Spitzgewinde mit einem Flankenwinkel in der Größe von 60° ausgebildet. Für Holzschrauben mit größerem Durchmesser werden Löcher vorgebohrt. Der Bohrlochdurchmesser für den Gewindeabschnitt soll nach den anerkannten Regeln der Technik dem 0,7-fachen des Schraubennenndurchmessers entsprechen. Der Bohrlochdurchmesser für Holzschrauben ist somit wie bei Betonschrauben grundsätzlich immer kleiner als der Außendurchmesser d1 bzw. Nenndurchmesser des Holzschraubengewindes, um ein sicheres Einschneiden und eine gute Verbundwirkung zwischen Schraubanker und dem faserigen Holzankergrund zu erzielen. Die Geometrie des Holzschraubengewindes ist in der Regel an die Belastbarkeit des Holzes angepasst.
Im Vergleich zur wie vor beschriebenen Betonschraube liegt die Gewindesteigung p von bekannten Holzschrauben im Bereich p = 2,5 .. 3,7 (d1 - d3)/2, wobei d3 der Kerndurchmesser ist und zulässige Maß-Abweichungen von p berücksichtigt sind. Bei bekannten Holzschrauben mit Nenndurchmessern von 2 bis 20 mm mit Gewindesteigung p und Gewindetiefe t ist das Verhältnis p/t = 3 und damit im Mittel ungefähr konstant. Offensichtlich sind Gewindetiefe t und Gewindeganghöhe p damit direkt abhängig vom Nenndurchmesser der Schraube.

Wie bei der Beschreibung von Flachgewinden gebräuchlich, wird nachfolgend die "Gewindesteigung" p gleichbedeutend mit "Steigung" bzw. "Gewindeganghöhe" s verwendet und zur vereinfachten Beschreibung der Term (d1 - d3)/2 durch den Begriff der "Gewindetiefe" t ersetzt. Im Falle von mehrgängigen Gewindeformen ist der schraubenaxiale Gewindeabstand s gemeint und nicht die Steigung oder Ganghöhe p eines Gewindeganges.

Mit EP 1686271 B1 sind Sanddübel bekannt geworden, die zum Beispiel in Wirkverbindung mit Holzschrauben in mit qualitätskontrollierten Mauerbohrern hergestellten Bohrlöchern einen zweiteiligen Schraubanker in Beton oder anderen massiven Ankergründen bilden. Große Ankerkräfte lassen sich mit dieser Holzschraube-Sanddübel-Kombination erzielen, wenn die Nenndurchmesser von Holzschraube und Mauerbohrer (Bohrloch) gleich groß sind. Die lichten Weiten von mit qualitätskontrollierten Mauerbohrern hergestellten Bohrlöchern in Beton sind nämlich praktisch immer etwas größer als die Außengewindemaße einer Holzschraube mit gleichem Nenndurchmesser, in der Regel auch unter Ausnutzung der zulässigen Maßtoleranzen für Schraubengewinde und Bohrereckmaßen.
Die Wirkungsweise solcher Sanddübelverankerungen beruht im Wesentlichen auf der großen Scherfestigkeit und Dilatationswirkung von verdichteten dünnen Sandschichten im Mikroformverbund mit der Bohrlochwand und den elastischen Druckeigenschaften des aus den Sandkörnern gebildeten Partikelsprengwerks.

Ein großer Vorteil von bekannten Schraube-Sanddübel-Systemen liegt in der eigentümlichen Mechanik und Kinematik des psammischen Sandwerkstoffs beim Eindrehen der Schraube. Die Schraubenspitze lockert den Sandwerkstoff des Sanddübels auf und der Sand setzt somit dem furchenden Schraubengewinde nur wenig Widerstand entgegen. Im Übergangsbereich von der Schraubenspitze zum volumentreuen Gewindeabschnitt, mit im Wesentlichen konstantem Außen- und Kerndurchmesser, wird der Sand wieder verdichtet und zwischen den Gewindeflanken, der Oberfläche des Schraubenkerns und der Bohrlochwand komprimiert. Da sich das Schraubengewinde bereits vor der Verdichtung des Sandes nahezu vollständig in den Sand des Sanddübels eingeformt hat, wird das Gewinde weniger durch Fräsen beansprucht. Dadurch können auch Schraubenstähle für die Fertigung der Schraube verwendet werden, die nicht besonders gehärtet werden können oder gehärtet werden sollen. Da das Schraubengewinde die Bohrlochwand nicht berührt, wird die Struktur des Ankergrundes auch nicht geschädigt.

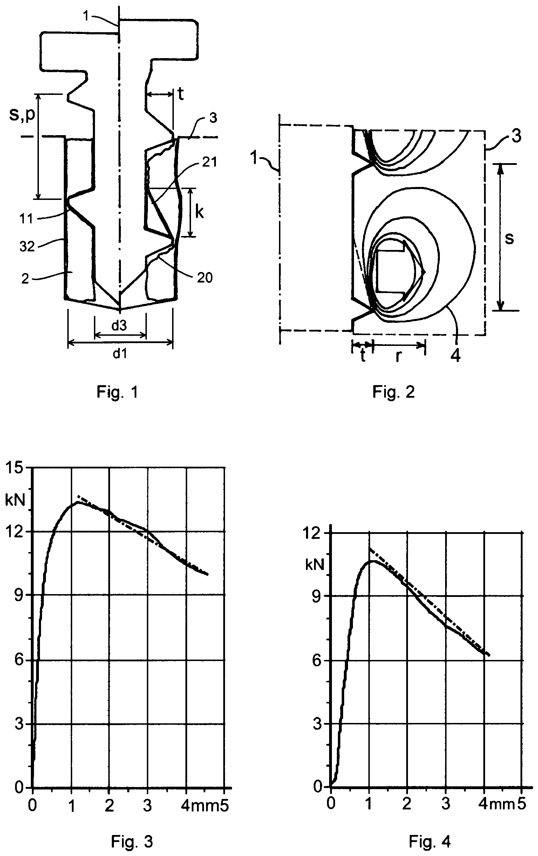

In Fig. 3 und Fig. 4 sind beispielhaft Ergebnisgrafiken von Auszugversuchen solcher Sanddübelverankerungen in Beton dargestellt, wobei jeweils eine genormte 10 mm Holzschraube in Wirkverbindung mit einem 10 mm Sanddübel in einem 10 mm Bohrloch in Beton verankert ist. Aufgetragen ist jeweils die Auszugkraft (in kN) über dem relativen Verschiebungsweg (in mm) zwischen Schraube und Bohrloch. Die zusätzlich eingezeichneten Strich-Punkt-Linien deuten an, dass es sich beim Auszugverhalten dieser Art Schraubanker um einen praktisch linearen Reibungsverbund handelt, wobei sich der mobilisierbare Gleitreibungswiderstand vereinfacht aus der Neigung der Strich-Punkt-Linie ermitteln lässt. Aus dem Verhältnis von Kraftabnahme zu Wegzunahme und Schraubenumfang ergibt sich zum Beispiel für die zu Fig. 3 zugehörige Sanddübelverankerung ein maximal mobilisierbarer Auszugwiderstand in der Größe von etwa 35 MPa und zu Fig. 4 in der Größe von etwa 45 MPa.
In der Praxis sind solche Auszugwiderstände mit Holzschraubengewinde jedoch nicht in jedem Fall sicher erzielbar, zum Beispiel weil das Installationsmoment beim Einschrauben für die Schraube zu groß werden oder weil eine Rissöffnung den verdichteten Sanddübel-Werkstoff lokal auflockern kann.

Mit DE 102005003997 B3 ist bereits ein Selbstsichernder Schraubanker bekannt geworden, der im Wesentlichen aus einer Schraube und einem Sanddübel-Bohrloch-System besteht. Eine Schraube, die den dort beschriebenen Selbstsicherungseffekt oder die Keil-Kinematik in vorteilhafter Weise bewirkt, ist jedoch nicht offenbart. Bekannte Holzschrauben erzielen in Verbindung mit einfachen Sanddübel-Elementen gemäß EP 1686271 bereits einen guten Reibungsverbund infolge Dilatationswirkung des verdichteten Sandes. Jedoch ist beispielsweise die Ganghöhe p dieser Schrauben, also der schraubenaxiale Gewindeabstand s des Schraubengewindes, im Verhältnis zur Gewindetiefe t in der Praxis nicht geeignet, um die Keil-Kinematik in vorteilhaftem Maße zu bewirken. Gleichzeitig führt die bekannte Gewindegeometrie zu hohen Einschraubwiderständen, weil unter anderem infolge des ungünstigen Verhältnisses von Gewindeganghöhe p zu Gewindetiefe t relativ viel Verformungsarbeit beim Gewindefurchen im Sandwerkstoff geleistet werden muss und die wirksame Reiboberfläche der Schraube bei entsprechenden Flächenpressungen und resultierendem Reibungswiderstand relativ groß ist.

Der Erfindung liegt folglich die Aufgabe zugrunde, einen Schraubanker mit einer verbesserten Schraube vorzuschlagen, die in Verbindung mit einem Sanddübel größere Ankerkräfte bei gleichzeitig geringerem Installationsmoment oder Energieaufwand beim Einschrauben der Schraube oder in gerissenem Beton bewirken kann.

Die Aufgabe wird durch einen Schraubanker gemäß Anspruch 1 gelöst.
Vorteilhafterweise ist der Nenndurchmesser der Schraube größer als 14 mm, beträgt die Gewindetiefe mindestens 2 mm oder ist die Gewindegangshöhe größer als die 5-fache Gewindetiefe.

Die Erfindung wird anhand der Zeichnungen erläutert. Darin bedeuten:
- 1: Schraubanker, Schraube, Ankerstahl, Betonrippenstahl,
- 2: Sanddübel, Sandwerkstoff,
- 3: Ankergrund, Mörtelkörper,
- 4: Isolinien, Linien gleicher Radialverschiebung,
- 11: Gewindeflanke,
- 20: Auflockerungszone im Sandwerkstoff des Sanddübels,
- 21: Gleitkeil,
- 32: Bohrloch, Bohrlochwand,
- dl: Außendurchmesser des Schraubengewindes,
- d₃: Kerndurchmesser des Gewindeabschnitts der Schraube
- t: Gewindetiefe, Rippenhöhe, Höhe des Gleitkeils,
- p: Gewindeganghöhe, Ganghöhe der Schraube, Steigung, Gewindesteigung,
- s: axialer Rippenabstand, schraubenaxialer Gewindeabstand, Gewindeganghöhe,
- r: Wirktiefe der Spreng- oder Tiefenwirkung, imaginäre Tiefe der Verbund-Rippenwirkung,
- k: schraubenaxiale Länge des Gleitkeils.

Fig. 1 zeigt eine Schraube 1, die mittels eines Sanddübels 2 in einem Ankergrund 3 befestigt ist, in einem zweigeteilten schematischen Längsschnitt ohne Anspruch auf Maßstabstreue. Der linke Teil von Fig. 1 zeigt die in Sanddübel und Bohrloch eingeschraubte Schraube. Der rechte Teil von Fig. 1 zeigt qualitativ die zugehörige Interaktion von Schraube, Sandwerkstoff und Ankergrund, wenn die Schraube bis zur Aktivierung der Keil-Kinematik nach oben gezogen wird.

Fig. 2 zeigt einen Diagrammausschnitt wie aus einer Computer-Simulation zu einer Fig. 1 (rechter Teil) analogen Interaktion eines in einen Mörtelkörper 3 einbetonierten schraubenförmigen Ankerstahls 1 mit einem schraubenaxialen Gewindeabstand bzw. Ganghöhe oder axialem Rippenabstand s. Dargestellt sind die Radialverschiebungen im Mörtelkörper infolge einer nach oben ausgeübten Zugkraft am Ankerstahl und der vertikalen Relatiwerschiebung, wobei die Isolinien 4 jeweils gleiche Verschiebungswerte repräsentieren. Der radial nach außen gerichtete Pfeil im Diagramm begrenzt beispielhaft eine repräsentative radiale Projektionsfläche des Verschiebungsfeldes bei einer Rippe, das sich bis zur Wirktiefe r erstreckt.

Die Schraube-Sanddübel-Bohrloch-Verbundwirkung hat zum Ziel, Zugkräfte an der Schraube radial möglichst tief in den Ankergrund in der Umgebung des Bohrlochs einzutragen. Für die Erzielung einer möglichst großen Tiefenwirkung ist es dazu vorteilhaft, wenn das Schraubengewinde möglichst nahe an die Bohrlochwand heranreicht und sich ein möglichst großmaßstäblicher Gleitkeil einstellen kann. Die Größenmaße von Gewindeflanke, Gleitkeil und Radialverschiebungen im Ankergrund sind nämlich geometrisch direkt voneinander abhängig. Sie sind aber weitgehend unabhängig vom Schraubendurchmesser.

Die große Festigkeit und Steifigkeit der erfindungsgemäßen Schraube-Sanddübel-Verbindung beruht auf dem relativ schersteifen und überwiegend kristallinen Sandkorn-Partikelsprengwerks infolge des mit der Erfindung erzielten geringen Abstandes zwischen Schraubengewinde und Bohrlochwand. Um nachteiligen Reibschluss zwischen Schraube und Bohrlochwand zu vermeiden, soll die Schraube die Bohrlochwand jedoch möglichst nicht berühren.

In praktischer Ausgestaltung bestehen Sanddübel für bekannte Schrauben mit Durchmessern von 8 mm bis 16 mm Durchmesser aus Quarzsand oder mineralischen Sandmischungen in ausgewählten Korngrößenbereichen. Die Wanddicke bzw. Schichtdicke des hohlzylindrischen Sanddübels beträgt inklusive Gleitschicht etwa 2,5 mm bis 3,5 mm, je nach Korngrößenverteilung des Sandes und gewähltem Maß der Sand-Verdichtung zwischen Schraubenkern und Bohrlochwand. Für größere Schraubankerdurchmesser können auch Sandwerkstoffschichten bis ca. 6 mm Schichtdicke vorteilhaft sein, wobei die Größe des Durchmessers des Schraubankers im Prinzip nach oben hin nicht begrenzt ist. Die Gewindetiefe t der Schraube hängt von der Ausgestaltung des Sanddübels ab und nicht vom Durchmesser der Schraube.

Durch Umlagerung der Sandkörner und Kompression zwischen eingedrehter Schraube und der Bohrlochwand des in gewissem Maße auch elastisch gedehnten Bohrlochs lässt sich die Sandwerkstoffschicht auf eine minimale Schichtdicke von etwa 1,3 mm bis 4 mm verdichten und komprimieren. Je nach Schraubendurchmesser und Festigkeit des Schraubenstahls lässt sich der Sandwerkstoff eines Sanddübels bis zur Gefügedichte eines Betons verdichten oder komprimieren. Somit wirkt die in das Sanddübel-Werkstoff-Kontinuum eingebundene Schraube wie eine einbetonierte Schraube, bei der die Gewindeflanken vollständig in das Sand-Beton-Kontinuum eingreifen und somit einen vollständigen Hinterschnitt oder Stahl-Beton-Verbund wie vor den Rippen eines Betonrippenstahls bilden. Die verdichtete Sandschicht des Sanddübels wirkt dabei quasi wie der tragfähige Ankergrund selbst.

Je nach Dicke der verdichteten Sandwerkstoffschicht wird man die Größe der Gewindetiefe t so bemessen, dass das Spitzgewinde die Sandwerkstoffschicht möglichst tief, aber gerade nicht vollständig durchdringt, um die tragende Gewindefläche bzw. die wirksame Hinterschneidung vorteilhaft zu vergrößern und um die Bohrlochwand nicht zu berühren. Bei allen größeren Schraubendurchmessern werden dadurch Gewinde mit Gewindetiefen t bis ca. 4 mm ermöglicht, die praktisch vollständig in ein tragfähiges Ankergrund-Kontinuum einbinden und dadurch entsprechend große Hinterschneidungsflächen im Ankergrund ausbilden können. Mit der Erfindung können also die tragenden Gewindeflächen gegenüber bekannten einteiligen Schraubankern vorteilhaft vergrößert werden.

In erfindungsgemäßer Ausgestaltung eines Schraubankers mit kleinem Durchmesser wird für die Schraube eine minimale Gewindetiefe t in der Größe von t = 1,1 mm vorgeschlagen, um die Keil-Kinematik des Sandwerkstoffs, auch unter Verwendung von Schrauben mit geringer Festigkeit, besser nutzen zu können.

Eigene Auszugversuche von in Sand-Zementmörtel einbetonierten Ankerstählen zeigen, dass die kinetische Wirkung sich ausbildender "Gleitkeile" in plastizierten Sand-Mörtelzonen radial nach außen gerichtete "Sprengwirkung" und im umgebenden Sandmörtelkontinuum bereichsweise Radialverschiebungen erzeugt. Die Konstruktion der verwendeten Rundstahlanker mit aus Quadratstahl aufgeschweißten "Rippen" in Gewinde-Form entspricht in etwa einer Schraube mit Flachgewinde. Die beobachteten Gleitkeile über den Quadratstahl-Rippen weisen zum Beispiel Gleitflächenneigungen von t/k = 1/3 bis 1/4 gegen die Achse des Rundstahls auf.

Für die Erzielung einer möglichst großen Tiefenwirkung unter Ausnutzung von geometrischen Maßstabseffekten ist es a priori vorteilhaft, wenn die Gewindetiefe t möglichst groß ist und sich ein Gleitkeil 21 über die volle Länge k ausbilden kann. Wenn sich der Gleitkeil 21 vollständig ausbilden kann, erreicht die Tiefenwirkung demnach ihre maximale Wirktiefe r. Damit sich der Gleitkeil vollständig ausbilden kann, muss der schraubenaxiale Gewindeabstand s groß genug gewählt werden, um die negativen Auswirkungen einer möglichen Entspannung des Sandwerkstoffes 2 in einer Zone 20 hinter der in Zugrichtung benachbarten Gewindeflanke 11 zu begrenzen. Je größer der schraubenaxiale Gewindeabstand s ist, desto weniger wird die für die Keilausbildung erforderliche Kompression des Sandes 2 durch die Auflockerungszone 20 beeinträchtigt.

In erfindungsgemäßer Ausgestaltung der Schraube wird deshalb vorgeschlagen, die Gewindeganghöhe p einer eingängigen Schraube oder den schraubenaxialen Gewindeabstand s einer mehrgängigen Schraube mindestens 5-fach größer als die Gewindetiefe t auszuführen.

Auch wird damit vorteilhaft der Einschraubwiderstand des Schraubengewindes gegenüber bekannten Gewinde-Geometrien, zum Beispiel von Holzschrauben, reduziert und damit ein leichteres oder Energie sparendes Eindrehen der Schraube in das Sanddübel-Bohrloch-System in Beton oder anderen festen Ankergründen ermöglicht. In der Praxis ermöglicht die Erfindung auch eine spreizdruckarme Ausgestaltung von Sanddübel-Befestigungen, bei der die volle mechanische Spreizwirkung vorteilhaft erst mit der Zugkraft der Schraube aktiviert oder mobilisiert wird.

Die vorgeschlagene Verhältnis-Untergrenze von Gewindeganghöhe p zu Gewindetiefe t ist bei erfindungsgemäßem Schraubanker im Prinzip unabhängig vom Durchmesser der Schraube, zum Beispiel auch für Schrauben oder Rohrschrauben mit einem Nenndurchmesser größer als 100 mm. Allerdings kann der Vorschlag bei einer Schraube mit kleinem Durchmesser zu ungeeignetem Steilgewinde führen, weshalb zur vorteilhaften Ausgestaltung eines relativ kleinen erfindungsgemäßen Schraubankers vorgeschlagen wird, Schrauben mit einem Nenndurchmesser größer als 10 mm zu verwenden.

Ein weiterer Vorteil des vorgeschlagenen Schraubankers ergibt sich dadurch, dass der Sanddübel beliebig tief in ein Bohrloch gesetzt werden kann und dass dadurch erfindungsgemäße Schrauben in beliebiger Länge für Verankerungen in Beton oder Fels ohne zusätzliche (Teil-) Überbohrung des Bohrloches und ohne Beschädigung der Bohrlochwand verwendet werden können.

Weitere Vorteile des vorgeschlagenen Schraubankers ergeben sich daraus, dass zulassungsfähige, instantan wirkende Schraubanker ohne zusätzlichen Mörtel auch in Nenngrößen über 14 mm, zum Beispiel bis 50 mm, ermöglicht werden und somit zum Beispiel auch für Schienenbefestigungen im Kranbahn- und Gleisbau geeignet sind. Die Gewindetiefe t beträgt dann vorteilhaft mindestens 2 mm oder das Verhältnis p/t ist vorteilhaft größer als 5.

## Patentansprüche

1. Schraubanker, bestehend aus einer Schraube (1) mit einem Gewindeabschnitt und einer Schraubenspitze in Wirkverbindung mit einem Sanddübel (2) in einem mit einem Bohrer hergestellten Bohrloch (32) in Beton, Naturstein oder anderen festen Vollbaustoffen,
- wobei der Sanddübel (2) eine hohlzylindrische Formgestalt aufweist und zur Ausbildung von kinematischen Gleitkeilen (21) ausgestaltet ist,
- wobei der Gewindeabschnitt der Schraube (1) einen Kern mit konstantem Kerndurchmesser d₃, ein Spitzgewinde mit konstantem Außendurchmesser d1, Gewindeganghöhe p, Gewindetiefe t und Gewindeflanken (11) aufweist,
- wobei der Nenndurchmesser der Schraube (1) gleich dem Nenndurchmesser des Bohrers und der Außendurchmesser d1 des Gewindeabschnitts der Schraube kleiner als der Nenndurchmesser des Bohrers und kleiner als der Durchmesser des Bohrlochs und kleiner als der Nenndurchmesser der Schraube ist,
wobei der Gewindeabschnitt der Schraube (1) für eine Verbundwirkung mit dem Sanddübel (2) derart ausgestaltet ist, dass die Gewindeflanken (11) vollständig und mit einer Gewindetiefe t möglichst tief in den Sandwerkstoff (2) des Sanddübels eingreifen, ohne dass das Gewinde die Bohrlochwand (32) berührt und dass die Gewindeganghöhe p mindestens um ein derart Vielfaches größer ist als die Gewindetiefe t, dass bei Wirken einer Zugkraft an der Schraube (1) die kinematische Ausbildung von im Wesentlichen vollständigen Gleitkeilen (21) im Sandwerkstoff des Sanddübels bewirkbar ist,
und wobei der Nenndurchmesser der Schraube (1) größer als 10 mm ist, die Gewindetiefe t mindestens 1,1 mm beträgt und die Gewindeganghöhe p mindestens 5-fach größer als die Gewindetiefe t ist.

2. Schraubanker gemäß Anspruch 1,wobei der Nenndurchmesser der Schraube (1) größer als 14 mm ist, die Gewindetiefe t mindestens 2 mm beträgt oder die Gewindeganghöhe p größer als die 5 -fache Gewindetiefe t ist.

## Claims

1. Screw anchor, consisting of a screw (1) with a threaded portion and a screw tip in operative connection with a sand dowel (2) in a drilled hole (32) in concrete, natural stone or other solid solid building materials,
- wherein the sand dowel (2) has a hollow cylindrical shape and is designed to form kinematic sliding wedges (21),
- wherein the threaded portion of the screw (1) has a core of constant core diameter (d3), a pointed thread of constant outside diameter (d1), thread pitch (p), thread depth (t) and thread flanks (11),
- wherein the nominal diameter of the screw (1) is equal to the nominal diameter of the drill and the outer diameter (d1) of the threaded portion of the screw is smaller than the nominal diameter of the drill and smaller than the diameter of the drill hole and smaller as the nominal diameter of the screw,
- wherein the threaded portion of the screw (1) for a composite effect with the sand dowel (2) is designed such that the thread flanks (11) completely and with a thread depth t deep as possible extend into the sand material (2) of the sand dowel without the thread touches the borehole wall (32) and that the thread pitch p is at least by such a multiple greater than the thread depth t, that when a tensile force affects on the screw (1), the kinematic formation of substantially complete sliding wedges (21) in the sand material of the sand anchor is effected, and
- wherein the nominal diameter of the screw (1) is greater than 10 mm, the thread depth t is at least 1.1 mm and the thread pitch p is at least 5 times greater than the thread depth t.

2. Screw anchor according to claim 1, wherein the nominal diameter of the screw (1) is greater than 14 mm, the thread depth t is at least 2 mm or the thread pitch p is greater than 5 times the thread depth t.

## Revendications

1. Vis d'ancrage, consistant en une vis (1) avec une partie filetée et une extrémité de vis en liaison fonctionnelle avec une cheville en sable (2) dans un trou foré (32) en béton, en pierre naturelle ou en un autre matériau de construction solide,
dans laquelle la cheville en sable (2) a une forme cylindrique creuse et est conçue pour former des coins cinématiques (21),
dans laquelle la partie filetée de la vis (1) a un noyau de diamètre de noyau constant (d3), un filetage pointu de diamètre extérieur constant (d1), une hauteur de filetage (p), une profondeur de filetage (t) et des flancs de filetage (11),
dans laquelle le diamètre nominal de la vis (1) est égal au diamètre nominal du foret et le diamètre extérieur (d1) de la partie filetée de la vis est inférieur au diamètre nominal du foret et inférieur au diamètre du trou de perçage et inférieur au diamètre nominal de la vis,
dans laquelle la partie filetée de la vis (1), pour avoir un effet composite avec la cheville en sable (2), est conçue tellement que les flancs de la vis filetée (11) soient complètement et avec une profondeur de filetage (t) aussi profonde que possible dans le sable de la cheville en sable (2) sans que le filetée touche la paroi du trou foré (32) et que la hauteur de filetage (p) est supérieur au moins d'un multiple tel que la profondeur du filetage (t), que lorsqu'un effort de traction sur la vis (1) est effectué, la formation cinématique de cales coulissantes sensiblement complètes (21) dans le matériau de sable de la cheville de sable est effectuée,
et dans laquelle le diamètre nominal de la vis (1) est supérieur à 10 mm, la profondeur de filetage (t) est d'au moins 1,1 mm et la hauteur de filetage (p) est au moins 5 fois supérieur à la profondeur de filetage (t).

2. Vis d'ancrage selon la revendication 1, dans laquelle le diamètre nominal de la vis (1) est supérieur à 14 mm, la profondeur de filetage (t) est d'au moins 2 mm ou la hauteur de filetage (p) est supérieur à 5 fois la profondeur de filetage (t).
